# EUROPÄISCHE PATENTANMELDUNG

(11) **EP 3 975 389 A1**
(43) Veröffentlichungstag der Anmeldung: **30.03.2022**
(21) Anmeldenummer: 20198981.1
(22) Anmeldetag: 29.09.2020
(51) Int. Cl.: H02K 3/487, H02K 15/00, H02K 15/06

(54) **NUTVERSCHLUSS, WERKZEUG UND VERFAHREN ZUR GLEICHZEITIGEN MONTAGE EINER WICKLUNG UND EINES NUTVERSCHLUSSES**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft einen Nutverschluss (9) für eine Nut (7) in einem Stator (1) einer dynamoelektrischen Maschine, ausgebildet als ein sich längs erstreckender Streifen aus einem Isoliermaterial, wobei in dem Streifen eine Stanzung (6) angeordnet ist.

## Beschreibung

Die Erfindung betrifft einen Nutverschluss für eine Nut in einem Stator einer dynamoelektrischen Maschine, ausgebildet als ein sich längs erstreckender Streifen aus einen Isolationsmaterial.

Des Weiteren betrifft die Erfindung ein Werkzeug zur gleichzeitigen Montage einer Wicklung in eine Nut und einem die Nut verschließenden Nutverschluss.

Auch betrifft die Erfindung ein Verfahren zur gleichzeitigen Montage einer Wicklung in eine Nut und eine die Nut verschließenden Nutverschluss.

Aus der DE 10 2017 101 381 A1 ist bereits ein Nutverschluss und ein Verfahren zum Einbau des Nutverschlusses, beispielsweise in einen Stator, offenbart.

Im Sinne der Erfindung ist unter einen Nutverschluss ein Deckschieber zu verstehen. Als Deckschieber wird dabei ein Flächenisolierstoff betrachtet, der insbesondere als ein Streifen ausgebildet ist und die Wicklung in den Nuten isoliert. Bei einem Einziehen von Wicklungen in beispielsweise ein Blechpaket werden ebenfalls Flächenisolierstoffe mit in die Nuten eingebracht. Als Nutauskleidung dient hierbei ein sogenannter Nutkasten. Dabei handelt es sich um einen gefalzten Flächenisolierstoff, welcher mit seiner Querschnittsform idealerweise an die Kontur der Nut angepasst ist und an der Nutwandung anliegt. Die Nutauskleidung bildet dabei eine zusätzliche flächige elektrische Barriere zwischen dem Wicklungssystem, insbesondere zwischen den Kupferwicklungen aus Lackdraht und einem magnetisch leitfähigen Körper, wie beispielsweise bei einem Blechpaket oder bei einem Stator.

Ein Einbringen von Deckschiebern bzw. ein Montieren des Nutverschlusses, kann in eine manuelle Vorgehensweise und in eine automatisierte Vorgehensweise unterteilt werden. Bei der manuellen Vorgehensweise wird der Deckschieber von der Statorstirnseite an der bereits mit einer Wicklung und einer Grundisolation bestückten Nut angesetzt und axial in die Nuten eingeschoben. Bei der Montage werden unter erhöhten Kraftaufwand Windungen, die leicht aus dem Nutöffnungsschlitz ragen, in die Nut gedrückt.

Bei einer teilautomatisierten Variante wird der Deckschieber zusammen mit den Windungen in die Nut gepresst (siehe beispielsweise die deutsche Offenlegungsschrift 26 30 183 A1). Ein Werkzeug ist bereits mit den Deckschiebern und vorgewickelten Spulen bestückt.

Bei dem bekannten Stand der Technik ist es von Nachteil, dass zum einen ein zusätzliches Zentrier- und Fixierstück verwendet wird oder zum anderen die Deckschieber durch einen Haltering gehalten werden müssen.

Es ist daher die Aufgabe der vorliegenden Erfindung, eine Montage eines Deckschiebers gegenüber dem Stand der Technik zu vereinfachen.

Zur Lösung dieser Aufgabe wurde ein Nutverschluss für eine Nut in einem Stator einer dynamoelektrischen Maschine entwickelt, welche ausgebildet ist, als ein sich längs erstreckender Streifen aus einem Isoliermaterial, wobei in dem Streifen eine Stanzung angeordnet ist.

Im Sinne der Erfindung ist unter Stanzung ein Gebilde im Streifen zu verstehen, bei welchem entweder durch Stanzen Schlitze oder Rillen entstanden sind oder durch eine Perforation eine aufbrechbare Stelle entstanden ist.

Eine besonders vorteilhafte Ausgestaltung sieht vor, dass die Stanzung in einen Bereich des Streifens angeordnet ist, weleher im Wesentlichen innerhalb eines Nutschlitzbereiches liegt, wenn der Streifen in der Nut platziert ist.

Die Stanzung ist dabei ausgestaltet, dass ein Haken in die Stanzung eingreifen kann und den Streifen somit entlang der Nut fördern kann.

Auch ist es denkbar, dass die Stanzung in Form zweier paralleler Linien quer zur Längsachse des Streifens angeordnet ist. Oder der Nutverschluss weist eine Stanzung auf, welche u-förmig ausgestaltet ist, und damit quasi eine kleine Fensterklappe bildet.

Der erfindungsgemäße Nutverschluss kann mit Hilfe der Stanzung bei einer voll automatisierten Fertigung einer dynamoelektrischen Maschine entlang der Nut befördert werden. Eine Bestückung eines Werkzeuges zur vorzugsweise gleichzeitigen Montage einer Wicklung in eine Nut und einen die Nut verschließenden Nutverschluss kann nun vollautomatisch erfolgen. Nach einem Rückzug des Werkzeuges federt die Stanzung durch den Innendruck der Wicklung wieder zurück. Die eigentliche isolationstechnische unzulässige Stanzung ist somit schon teilweise wieder geschlossen und wird in einen späteren Verfahrensschritt durch ein Imprägnieren der Wicklung durch ein geeignetes Harz ausreichend verschlossen.

Ebenfalls betrifft die Erfindung ein Werkzeug zur vorzugsweise gleichzeitigen Montage einer Wicklung in eine Nut und eine die Nut verschließenden Nutverschluss, umfassend eine Nutschablone, welche auf einer Oberseite ausgestaltet ist, die zu montierende Wicklung aufzunehmen und auf einer Unterseite mittels einer Aufnahmefläche ausgestaltet ist, den Nutverschluss aufzunehmen, wobei der Nutverschluss ausgebildet ist, als ein sich längs erstreckender Streifen aus einem Isoliermaterial, in welchen eine Stanzung angeordnet ist, wobei die Aufnahmefläche eine Ausnehmung aufweist, und die Stanzung derart über der Aufnehmung angeordnet wird, dass ein an der Unterseite angeordneter Haken in die Stanzung eintaucht und dadurch einen Eingriff zur Mitnahme des Nutverschlusses entlang der Nut bereitstellt, wobei zeitgleich mit dem Einbringen der Wicklung die Nut durch den Nutverschluss verschlossen wird. Mit Vorteil kann nun gleichzeitig mit dem Einzug der Wicklung der Nutschlitz mit dem erfindungsgemäßen Deckschieber verschlossen werden.

Eine mögliche Ausgestaltung des Werkzeuges sieht vor, dass die Aufnahmefläche der Nutschablone im Bereich der Ausnehmung eine Schräge aufweist, wobei der Haken auf einem Schlitten angeordnet ist, welcher eine Gegenschräge aufweist. Mit Hilfe der Ausnehmung in der Schräge kann der Haken beim Gleiten des Schlittens über die Aufnahmefläche in die Stanzung eintauchen. Der Haken bzw. der Schlitten kann beispielsweise mit Federn gegen die Schräge gedrückt werden.

Verfahrensgemäß wird die Aufgabe durch ein Verfahren zur gleichzeitigen Montage einer Wicklung in eine Nut und einen die Nut verschließenden Nutverschluss dadurch gelöst, dass mittels einer Nutschablone eine auf einer Oberseite der Nutschablone zu montierende Wicklung angeordnet wird, und auf einer Unterseite der Nutschablone auf einer Aufnahmefläche ein Nutverschluss angeordnet wird, wobei der Nutverschluss ausgebildet ist, als ein sich längs erstreckender Streifen aus einem Isoliermaterial, in welchem eine Stanzung angeordnet ist, wobei die Aufnahmefläche eine Ausnehmung aufweist, und die Stanzung derart über der Ausnehmung angeordnet wird, dass ein an der Unterseite angeordneter Haken die bei einer Vorwärtsbewegung in die Stanzung eintaucht, und dadurch ein Eingriff zur Mitnahme des Nutverschlusses entlang der Nut entsteht, wobei zeitgleich mit dem Einbringen der Wicklung die Nut durch die Mitnahme des Nutverschlusses verschlossen wird.

Erfindungsgemäß gibt es demnach einen an einer geeigneten Stelle gestanzten Nutverschluss bzw. ein Werkzeug zum Führen des Nutverschlusses. Bei dem Werkzeug mit einem beweglichen Schlitten kann ein Haken des Schlittens, wenn dieser beispielsweise federvorgespannt oder zwangsgesteuert, in die Stanzung eintauchen und den Nutverschluss somit entlang der Nut befördern. Eine Bestückung des Werkzeuges kann nun mit Vorteil auch vollautomatisch erfolgen. Nach einem Rückzug des Werkzeuges federt die Stanzung den Innendruck der Wicklung wieder zurück.

Mit Vorteil kann die zurückgefederte Stanzung, welche prinzipiell isolationstechnisch gesehen eigentlich unzulässig ist, im Anschluss durch ein Imprägnieren mit einem Imprägnierungsmittel der Wicklung in der Nut wieder verschlossen werden.

Ein wesentlicher Vorteil des hier vorgestellten erfindungsgemäßen Nutverschlusses (Deckschiebers) bzw. Verfahren ist eine schnelle, einfache und zuverlässige Montage des Deckschiebers, die kostengünstig und prozesssicher ausführbar ist. Das vorgeschlagene Verfahren eignet sich dabei sowohl für eine radiale oder axiale oder auch radiale und axiale Bewegung aufweisende Einbring- bzw. Einschubbewegung der Wicklungsabschnitte bzw. der Nutverschlüsse (Deckschieber).

In der Zeichnung ist die Erfindung, insbesondere in einem Ausführungsbeispiel schematisch dargestellt. Es zeigen
- FIG 1: eine dreidimensionale Ansicht eines Werkzeuges zum Einbringen von Wicklung und Nutverschluss in einen Stator,
- FIG 2: eine dreidimensionale Ansicht eines Teils des Werkzeuges aus FIG 1,
- FIG 3: eine Detailansicht auf Wicklungen und Deckschieber,
- FIG 4: ein dreidimensionale Detailansicht einer Nutschablone,
- FIG 5: die aus FIG 4 bekannte Nutschablone in einer anderen perspektivischen Darstellung,
- FIG 6: einen Nutverschluss (Deckschieber),
- FIG 7: eine Detaildarstellung des Nutverschlusses mit einem Werkzeugschlitten,
- FIG 8: der aus FIG 7 bekannte Nutverschluss in einer Schnittdarstellung und
- FIG 9: eine Schnittdarstellung von Nutschablone und Schlitten.

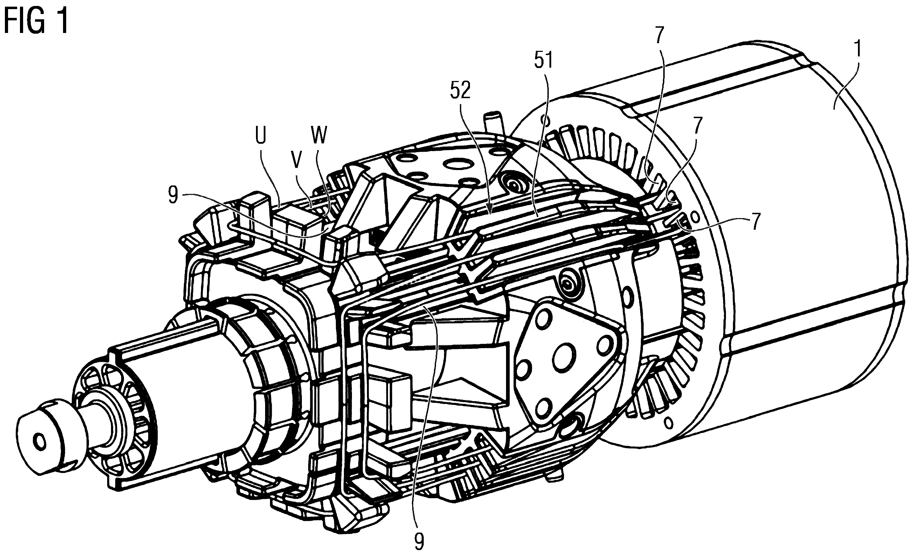

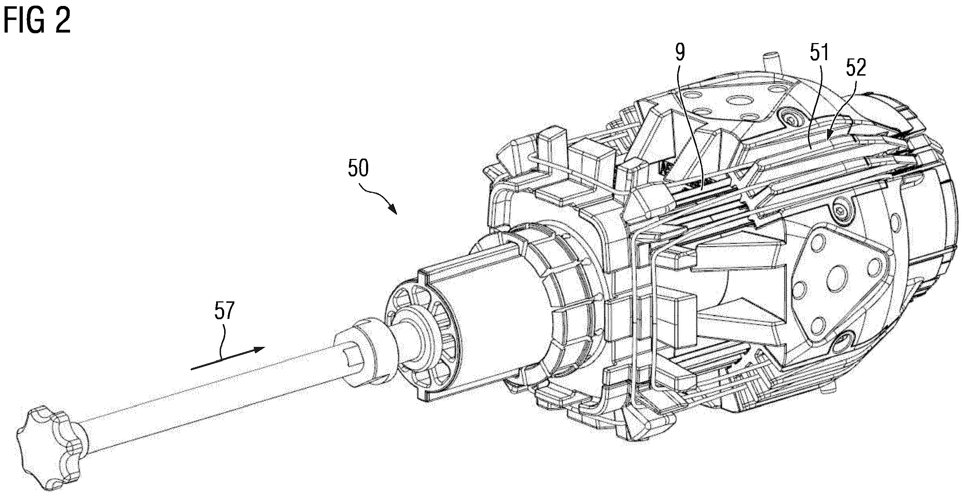

Gemäß der FIG 1 kann mit Hilfe des Werkzeuges 50, welches mit FIG 2 losgelöst von einem Stator 1 dargestellt ist, eine vollautomatisierte Montage der Wicklung einer dynamoelektrischen Maschine durchgeführt werden. Das Werkzeug 50 stellt zur gleichzeitigen Montage einer Wicklung u,v,w in eine Nut 7 und einen die Nut 7 verschließenden Nutverschluss 9 zumindest eine Nutschablone 51 bereit.

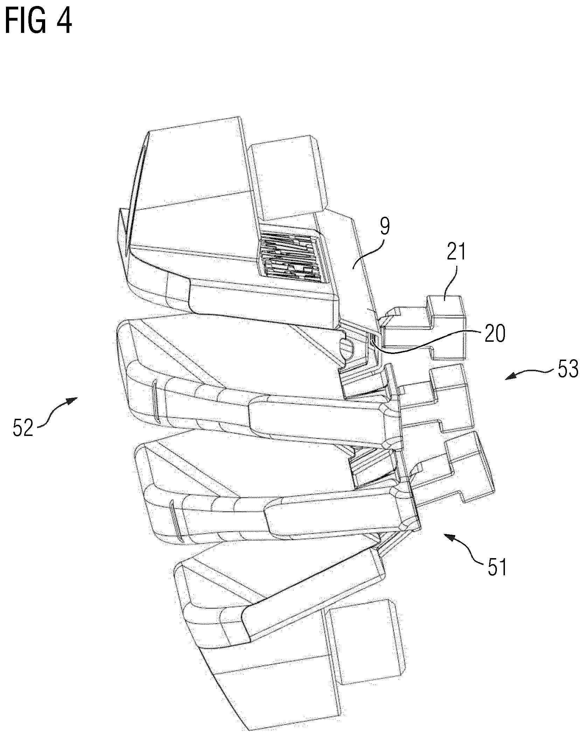

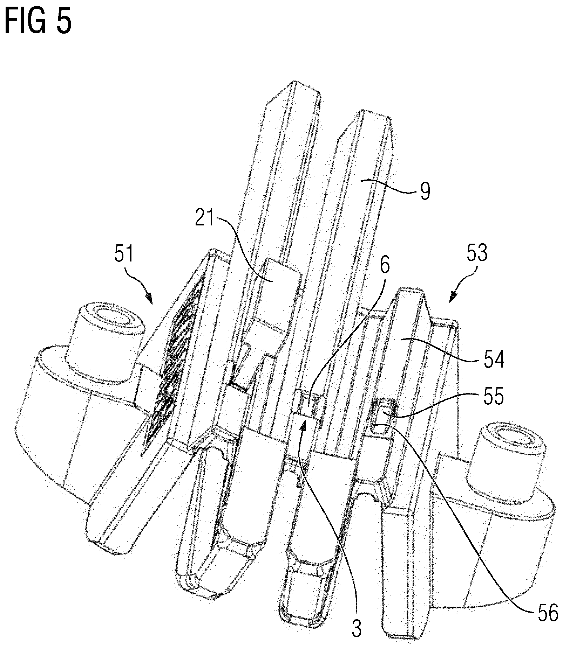

Zur Montage der Wicklungen u,v,w weist die Nutschablone 51 eine Oberseite 52 auf, welche ausgestaltet ist, die zu montierende Wicklung u,v,w aufzunehmen. Weiterhin weist die Nutschablone 51 eine Unterseite 53 auf (siehe auch FIG 4 und 5), welche mit einer Aufnahmefläche 54 ausgestaltet ist, welche den Nutverschluss 9 aufnehmen kann. Der Nutverschluss 9 ist ausgebildet als ein sich längs erstreckender Streifen aus einem Isoliermaterial, in welchem eine Stanzung 6 angeordnet ist. Dadurch, dass die Aufnahmefläche 54 eine Ausnehmung 55 aufweist, kann die Stanzung 6 bei einer Verschiebebewegung eines Schlittens 21 derart über der Ausnehmung 55 angeordnet werden, so dass ein an einer Unterseite 53 angeordneter Haken 20 in die Stanzung eintaucht und dadurch ein Eingriff 3 zur Mitnahme des Nutverschlusses 9 entlang der Nut 7 bereitstellt, wobei zeitgleich mit dem Einbringen der Wicklung u,v,w die Nut 7 durch den Nutverschluss 9 verschlossen wird.

Die FIG 2 zeigt nochmal das Prinzip des Einziehens mit einer Einziehrichtung 57, wodurch die Schlitten 21 mit Hilfe eines Innenteils in Richtung der Nuten 7 gebracht werden.

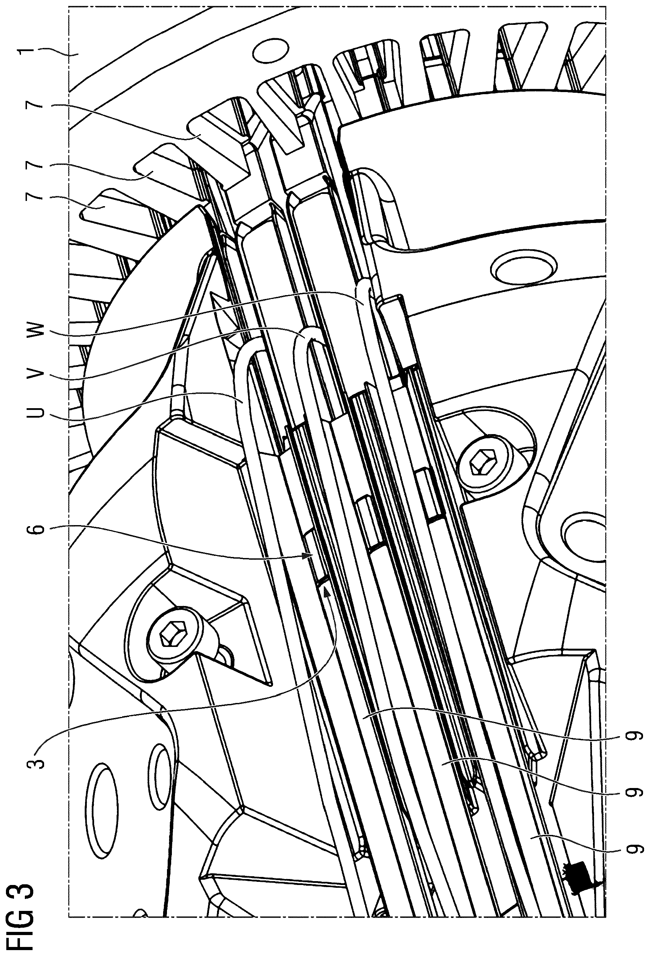

Mit der FIG 3 ist eine detailliertere Darstellung der auf den Nutverschlüssen 9 liegenden Wicklungen u,v,w abgebildet. Der Einfachheit halber ist mit FIG 3 jeweils nur ein Leiter einer mehrlagigen Wicklung dargestellt. Der Nutverschluss 9 ist unter den Wicklungen u,v,w angeordnet und weist die Stanzung 6 auf, durch welche ein Eingriff 3 entsteht, welcher mit einem Haken 20 von einem Schlitten 21 in die Einziehrichtung 57 bewegt werden kann.

Die FIG 4 zeigt in einer perspektivischen Detaildarstellung eine Nutschablone 51, mit der Oberseite 52 für die Wicklungen u,v,w und mit der Unterseite 53 für die Nutverschlüsse 9. Der Haken 20 eines Schlittens 21 kann in den Eingriff 3 einer Stanzung 6 des Nutverschlusses 9 eingreifen und den Nutverschluss 9 entlang einer zu verschließenden Nut 7 mitnehmen.

Gemäß FIG 5 soll noch einmal verdeutlicht werden, wie die Nutschablone 51 auf ihrer Unterseite 53 ausgestaltet ist. Im Wesentlichen weist sie drei Aufnahmeflächen 54 auf, wobei in jeder der Aufnahmeflächen 54 eine Ausnehmung 55 angeordnet ist. Dabei ist die Stanzung 6 derart über der Ausnehmung 55 angeordnet, dass ein an der Unterseite 53 angeordneter Haken 20 eines Schlittens 21 bei einer Vorwärtsbewegung in die Stanzung 6 eintauchen wird, und dadurch der Eingriff 3 zur Mitnahme des Nutverschlusses 9 entlang der Nut 7 entsteht.

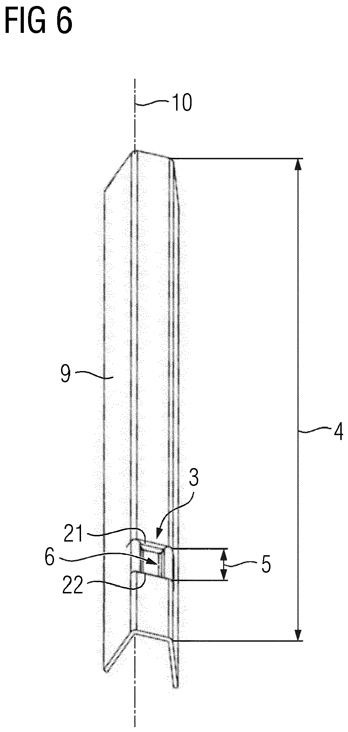

Die FIG 6 zeigt in einer perspektivischen Darstellung den Nutverschluss 9. Der Nutverschluss 9 ist ausgestaltet, eine Nut 7 in einem Stator 1 zu isolieren, dabei ist er als ein sich längs erstreckender Streifen aus einem Isoliermaterial ausgestaltet. In dem Streifen ist eine Stanzung 6 angeordnet. Die Stanzung 6 ist in einem Bereich 5 des Streifens angeordnet, welcher im Wesentlichen innerhalb eines Nutschlitzbereiches 4 liegt, wenn der Streifen in der Nut 7 platziert ist. Eine Ausgestaltungsvariante sieht vor, dass die Stanzung 6 in Form zweier paralleler Linien L1,L2 quer zur Längsachse 10 des Streifens angeordnet ist.

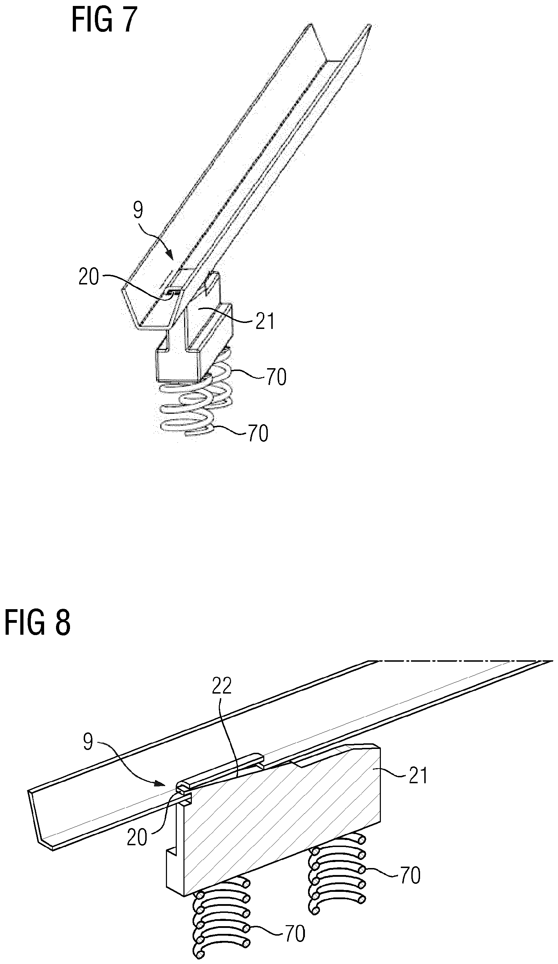

FIG 7 verdeutlicht noch einmal den Eingriff des Hakens 20 in die Stanzung 6 des Nutverschlusses 9. Der Schlitten 21 wird über Federn 70 gegen den Nutverschluss 9 gedrückt und kann mit Hilfe der in der Nutschablone 51 vorgesehenen Ausnehmung 55 in die Stanzung 6 eintauchen.

Die FIG 8 zeigt eine Schnittdarstellung der FIG 7, wobei hier noch einmal herausgestellt wird, dass auch der Schlitten 21 eine Gegenschräge 22 zu der Schräge 56 in der Nutschablone 51 aufweist, welches die Eintauchbewegung begünstigt.

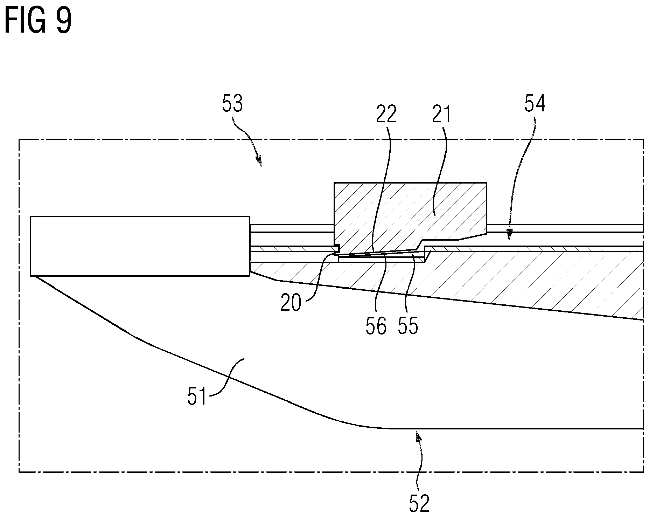

Abschließend sei mit FIG 9 noch einmal das Prinzip zum Eintauchen in die Stanzung 6 mit Hilfe der Gegenschräge 22 des Schlittens 21 und der Schräge 56 der Nutschablone 51 gezeigt.

Die FIG 9 zeigt eine Schnittdarstellung der Nutschablone 51, wobei der Haken 20 des Schlittens 21 in die Stanzung 6 eingetaucht ist. Die Aufnahmefläche 54 der Nutschablone 51 weist in einer Schräge 56 die Ausnehmung 55 auf. Bei einer Bewegung in die Einziehrichtung 57 kann der Schlitten 21 mit seiner Gegenschräge 22 mittels des Hakens 20 den Nutverschluss 9 mitnehmen.

## Patentansprüche

1. Nutverschluss (9) für eine Nut (7) in einem Stator (1) einer dynamoelektrischen Maschine, ausgebildet als ein sich längs erstreckender Streifen aus einem Isoliermaterial, **dadurch gekennzeichnet, dass** in dem Streifen eine Stanzung (6) angeordnet ist.

2. Nutverschluss (9) nach Anspruch 1, wobei die Stanzung (6) in einem Bereich (5) des Streifens angeordnet ist, welcher im Wesentlichen innerhalb eines Nutschlitzbereiches (4) liegt, wenn der Streifen in der Nut (7) platziert ist.

3. Nutverschluss (9) nach Anspruch 1 oder 2, wobei die Stanzung (6) ausgestaltet ist, dass ein Haken (20) in die Stanzung (6) eingreifen kann und den Streifen somit entlang der Nut (7) fördern kann.

4. Nutverschluss (9) nach einem der Ansprüche 1 bis 3, wobei die Stanzung (6) in Form zweier paralleler Linien (L1,L2) quer zur Längsachse (10) des Streifens angeordnet ist.

5. Nutverschluss (9) nach einem der Ansprüche 1 bis 4, wobei die Stanzung (6) U-förmig ausgestaltet ist.

6. Werkzeug (50) zur Montage einer Wicklung (u,v,w) in eine Nut (7) und einen die Nut (7) verschließenden Nutverschluss (9), umfassend eine Nutschablone (51), welche auf einer Oberseite (52) ausgestaltet ist die zu montierende Wicklung (u,v,w) aufzunehmen und auf einer Unterseite (53) mittels einer Aufnahmefläche (54) ausgestaltet ist den Nutverschluss (9) aufzunehmen, wobei der Nutverschluss (9) ausgebildet ist, als ein sich längs erstreckender Streifen aus einem Isoliermaterial, in welchem eine Stanzung (6) angeordnet ist, wobei die Aufnahmefläche (54) eine Ausnehmung (55) aufweist, und die Stanzung (6) derart über der Ausnehmung (55) angeordnet wird, dass ein an der Unterseite (53) angeordneter Haken (20) in die Stanzung (6) eintaucht und dadurch einen Eingriff (3) zur Mitnahme des Nutverschlusses (9) entlang der Nut (7) bereitstellt, wobei zeitgleich mit dem Einbringen der Wicklung (u,v,w) die Nut (7) durch den Nutverschluss (9) verschlossen wird.

7. Werkzeug (50) nach Anspruch 6, wobei die die Aufnahmefläche (54)) der Nutschablone (51) im Bereich der Ausnehmung (55) eine Schräge (56) aufweist, wobei der Haken (20) auf einem Schlitten (21) angeordnet ist, welcher eine Gegenschräge (22) aufweist.

8. Verfahren zur gleichzeitigen Montage einer Wicklung (u,v,w) in eine Nut (7) und einen die Nut (7) verschließenden Nutverschluss (9), wobei mittels einer Nutschablone (51) eine auf einer Oberseite (52) der Nutschablone (51) zu montierende Wicklung (u,v,w) angeordnet wird und auf einer Unterseite (53) der Nutschablone (51) auf einer Aufnahmefläche (54) ein Nutverschluss (9) angeordnet wird, wobei der Nutverschluss (9) ausgebildet ist, als ein sich längs erstreckender Streifen aus einem Isoliermaterial, in welchem eine Stanzung (6) angeordnet ist, wobei die Aufnahmefläche (54) eine Ausnehmung (55) aufweist, und die Stanzung (6) derart über der Ausnehmung (55) angeordnet wird, dass ein an der Unterseite (53) angeordneter Haken (20) bei einer Vorwärtsbewegung in die Stanzung (6) eintaucht und dadurch ein Eingriff (3) zur Mitnahme des Nutverschlusses (9) entlang der Nut (7) entsteht, wobei zeitgleich mit dem Einbringen der Wicklung (u,v,w) die Nut (7) durch die Mitnahme des Nutverschlusses (9) verschlossen wird.

9. Verfahren nach Anspruch 8, wobei nach dem Einbringen des Nutverschlusses (9) die Stanzung (6) im Anschluss durch ein Imprägnieren mit einem Imprägniermittel der Wicklung (u,v,w) in der Nut (7) wieder verschlossen wird.
